# EUROPÄISCHE PATENTSCHRIFT

(11) **EP 1 245 881 B1**
(45) Veröffentlichungstag und Bekanntmachung des Hinweises auf die Patenterteilung: **01.12.2004**
(21) Anmeldenummer: 02405101.3
(22) Anmeldetag: 11.02.2002
(51) Int. Cl.: F16K 11/074, F16K 15/06, F04B 39/10

(54) **Vielsitziges Poppetventil**
Poppet valve with multiple seats
Soupape à siège multiple

(30) Priorität: 27.03.2001 CH 5682001
(43) Veröffentlichungstag der Anmeldung: 02.10.2002
(73) Patentinhaber: MT Sealing Technology Inc., 8472 Ohringen (CH)
(72) Erfinder: Müller, Urs, 8442 Hettlingen (CH)
(74) Vertreter: Patentanwälte Feldmann & Partner AG

(56) Entgegenhaltungen:
- GB-A- 881 441
- US-A- 3 198 481
- US-A- 3 602 247
- US-A- 3 826 280
- US-A- 5 156 181

## Beschreibung

Die vorliegende Erfindung betrifft ein vielsitziges Poppetventil mit einem Ventilgehäuse bestehend aus einem Ventilsitzdeckel und einem Ventilanschlagdeckel, wobei die beiden das Ventilgehäuse bildenden Deckel kraftschlüssig zusammengehalten sind und die im Ventilanschlagdeckel lagernden Poppets als Ventilschliesselement mit ihrem Führungsteil in diesem Deckel beweglich geführt sind und mittels einer Druckfeder mit ihrem Schliesskopf an den Ventilsitzdeckel unter Druck anliegen.

Poppetventile sind seit vielen Jahren bekannt. Es handelt sich dabei um einseitig aktive Schliessventile, die je nach Bauart unter Druck oder Unterdruck schliessen beziehungsweise öffnen. Das Poppet selbst ist das eigentliche Ventilschliesselement und hat normalerweise einen Schliesskopf sowie einen Führungsteil. Der Schliesskopf liegt jeweils in der Schliessstellung an einen entsprechend geformten Ventilsitz an. Wie praktisch alle Ventile sind auch diese dem Verschleiss unterworfen. Der Verschleiss ist einerseits von der abrasiven Wirkung des zu sperrenden Fliessmediums abhängig und andererseits von den Kräften, die beim Schliessimpuls auftreten und selbstverständlich von der Häufigkeit der Betätigung.

Vielfach werden die Poppets relativ einfach konstruiert, so dass diese entsprechend preisgünstig und bei einer eventuellen Revision am besten ersetzt werden können. Problematischer ist dies normalerweise mit den Ventilsitzen. Diese werden üblicherweise manuell gereinigt und anschliessend neu eingeschliffen. Diese Tätigkeit ist relativ zeitaufwendig und benötigt entsprechend korrekt arbeitendes Fachpersonal.

Diese Problematik ist bereits seit Jahren bekannt. Entsprechend wurden auch schon viele Lösungsansätze für dieses Problem gesucht.

Aus der US-A-4,487,222 ist eine eher ungewöhnliche Lösung bekannt, bei der das Poppet mit auswechselbaren dem Verschleiss unterworfenen Dichtungsringen am Schliesskopf ausgerüstet ist. Diese Lösung dürfte lediglich dann von Bedeutung sein, wenn das Poppet als solches ein relativ teures Bauelement ist oder wenn die Dichtung am Ventilsitzteil kaum möglich ist.

Wesentlich häufiger sind Lösungen bekannt, bei denen auswechselbare den Sitz bildende Ringe an jenem Ventilgehäuseteil angebracht sind, das den Ventilsitz umfasst. Bei diesen Lösungen sind im Ventilgehäuseteil, der den Ventilsitz aufnimmt entsprechend geformte Ausnehmungen eingeformt, in denen diese Ventilsitzringe auswechselbar, jedoch form- und/oder kraftschlüssig gehalten sind. Solche Lösungen zeigen beispielsweise die US-A-5,156,181, die US-A 5,244,006 oder die US-A-5,403,168.

Vielsitzige Poppetventile entsprechend dem Oberbegriff des Patentanspruches 1, wie eingangs beschrieben, wurden von der Anmelderin bereits seit Jahren angeboten und sind aus den beiden Dokumenten US-A-3 602 247 und GB-A-881 441 bekannt. Diese Ventile sind üblicherweise in entsprechenden Zylinderkonstruktionen über Ventillaternen gehalten und werden saugseitig oder druckseitig in einen entsprechenden Zylinder eines Kolbenkompressors eingebaut. Bei entsprechenden Unterhaltsarbeiten wurden die entsprechenden vielsitzigen Poppetventile mit dem Ventilgehäuse vollständig ausgebaut, auseinander genommen und die Poppets ersetzt. Der Ventilsitzdeckel und der Ventilanschlagdeckel wurden gereinigt und anschliessend wurden sämtliche Sitze des Ventilsitzdeckels nachgeschliffen.

Je nach Grösse des entsprechenden Poppetventiles und der entsprechenden Anzahl der Sitze benötigt man für die Überarbeitung eines solchen Poppetventils zwischen einer halben und mehreren Stunden. Bei grossen Kompressoranlagen, wie sie zum Beispiel in Anlagen der Petrochemie vorkommen, sind zudem oft mehrere Kompressoren vorhanden, in denen jeweils zahlreiche Poppetventile vorhanden sind. Entsprechend ist bei der Revision die Kompressoranlage entsprechend lange ausser Betrieb.

Es ist die Aufgabe der vorliegenden Erfindung, ein vielsitziges Poppetventil anzubieten, welches mit erheblich geringerem Zeitaufwand revidiert werden kann.

Diese Aufgabe löst ein vielsitziges Poppetventil mit den Merkmalen des Oberbegriffes des Patentanspruches 1, wobei zwischen dem Ventilsitzdeckel und dem Ventilanschlagdeckel eine vielsitzige, auswechselbare Sitzplatte angeordnet ist, die mittels zweier Lagefixiermittel und eines Kraftschlussmittels lagepositioniert gehalten ist.

Weitere vorteilhafte Ausgestaltungsformen des Erfindungsgegenstandes gehen aus den abhängigen Ansprüchen hervor. Ein bevorzugtes Ausführungsbeispiel des Erfindungsgegenstandes ist in der Zeichnung dargestellt. Es zeigt:
- Figur 1: einen diametralen Vertikalschnitt durch ein vielsitziges Poppetventil gemäss der Erfindung im zusammengebauten Zustand und
- Figur 2: einen Vertikalschnitt durch den Ventilanschlagdeckel entlang der Linie A-A in Figur 3.
- Figur 3: eine Aufsicht auf den Ventilanschlagdeckel mit Blick auf die Innenseite des Ventilanschlagdeckels.

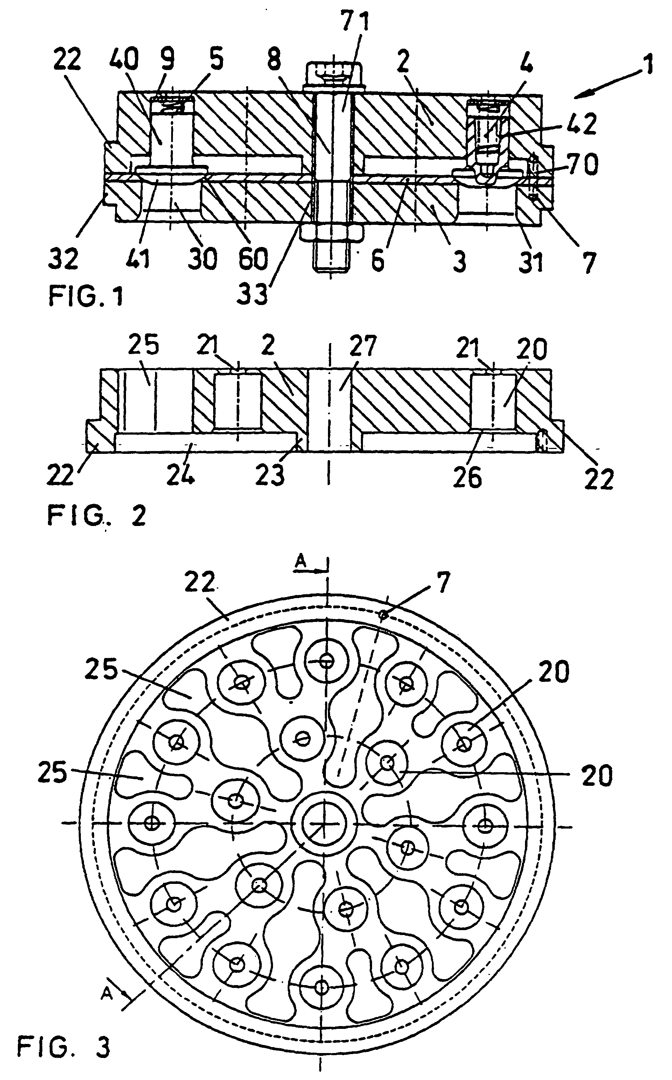

Sämtliche wesentlichen Bauelemente des erfindungsgemässen Poppetventils sind in -der Figur 1 ersichtlich. Das Ventilgehäuse ist mit der Bezugszahl 1 bezeichnet. Dieses Ventilgehäuse 1 besteht aus einem Ventilsitzdeckel 3 und einem Ventilanschlagdeckel 2, der wegen seiner Komplexität der Form in den Figuren 2 und 3 noch für sich gezeichnet dargestellt ist. Im Ventilanschlagdeckel 2 sind in entsprechenden Sacklochbohrungen die Poppets 4 gelagert. Auf diese Poppets 4 wirken entsprechende Druckfedern 5. Die Druckfedern 5 drücken das Poppet 4 auf eine entsprechende, geschliffene Sitzfläche 60. Die geschliffenen Sitzflächen 60 sind in einer Sitzplatte 6 angeordnet. Diese Sitzplatte 6 ist zwischen den beiden Deckeln, nämlich dem Ventilanschlagdeckel 2 und dem Ventilsitzdeckel 3 positioniert und kraftschlüssig gehalten. Die Positionierung erfolgt einerseits durch ein Lagefixiermittel 7 und andererseits über ein Kraftschlussmittel 8, das ebenfalls positionierende Funktionen hat. Die Druckfedern 5 ruhen im Ventilanschlagdeckel 2 auf entsprechenden Kunststoffringen 9, die in Sacklöchern im Ventilanschlagdeckel 2 lagern.

Das gesamte Ventilgehäuse kann im Prinzip aus einem beliebigen Material gefertigt sein. Das Material muss lediglich für die entsprechenden, hier relativ grossen, auftretenden Kräfte geeignet sein. Beispielsweise können die beiden Deckel 2 und 3 aus Stahl gefertigt sein. Im vorliegenden Fall ist das Ventilgehäuse 1 aus Stahl gefertigt und die Poppets aus PEEK. Entsprechend können die Poppets spritz- oder giesstechnisch gefertigt werden. Die Sitzplatte 6 wird man vorzugsweise aus einem möglichst verschleissfesten Material herstellen. Hierbei ist es sinnvoll, die Materialpaarung zwischen Poppet 4 und Sitzplatte 6 entsprechend der Anwendung zu optimieren. Insbesondere kommen für die Sitzplatte verschiedenste Metalllegierungen, auch Legierungen aus Buntmetall, in Frage.

Üblicherweise ist das Ventilgehäuse 1 kreiszylindrisch gestaltet. Gegenüber der Aussenwand ist einerseits am Ventilanschlagdeckel 2 ein vorspringender, umlaufender Kragen 22 angeformt und passgleich ein ebenso umlaufender Kragen 32 am Ventilsitzdeckel 3. Die umlaufenden Kragen 22 und 32 erlauben eine relativ einfache Montage des Ventils in einer entsprechenden, hier nicht dargestellten, Laternenkonstruktion. Der Ventilanschlagdeckel 2, der somit aus einer zylindrischen Platte geformt ist, weist eine Vielzahl von Sacklöchern 20 auf, die hier in gleichmässigen Abständen auf einem inneren und einem äusseren Kreis angeordnet sind. Auf dem inneren Kreis sind hier sechs Sacklöcher 20 und auf dem äusseren Kreis zwölf Sacklöcher 20 angeordnet, so dass das gesamte vielsitzige Ventil achtzehn Poppets aufweist. In der Figur 2 ist auf der linken Seite ein Sackloch des inneren Kreises und auf der rechten Seite ein -Sackloch 20 des äusseren Kreises geschnitten. Jedes Sackloch 20 ist mit einer Ausstoss- und Entlastungsbohrung 21 versehen, die zur Aussenfläche des Ventilanschlagdeckels 2 führt. Diese Bohrungen haben wie ihr Name sagt zwei Funktionen. Es ist durchaus möglich, dass kleine Restmengen von Fliessströmen entlang den Poppets in die Sacklöcher einströmen können. Entsprechend könnte sich unterhalb des Poppets beispielsweise ein Druckluftkissen aufbauen, welches die Funktion des Ventiles völlig verfälschen würde. Dank der entsprechenden Bohrung 21 können diese Druckluftreste entweichen. Die zweite Funktion besteht darin, dass bei entsprechenden starken Verschmutzungen es dazu kommen kann, dass einzelne Poppets in den Sacklochbohrungen verkleben und mittels einem entsprechenden harten Stift kann so das Poppet von der Rückseite her ausgestossen werden, wenn das Ventil demontiert ist.

Ferner erkennt man auf der zur Gehäuseinnenseite liegenden Fläche des Ventilanschlagdeckels 2 eine umlaufende Schulter 23, die eine zentrale Durchgangsbohrung 27 umgibt. Diese umlaufende Schulter 23 erstreckt sich bis auf ein Niveau, welches dem Niveau des umlaufenden Kragens 22 entspricht. Im zusammengebauten Zustand des erfindungsgemässen Ventiles liegen der umlaufende Kragen 22 und die umlaufende Schulter 23 auf der erwähnten Sitzplatte 6 auf. Zwischen dem umlaufenden Kragen 22 und der umlaufenen Schulter 23 ist ein Druckentlastungsraum 24 in den Ventilanschlagdeckel 2 eingelassen. Dieser Entlastungsraum 24 kommuniziert über Durchbrüche 25 mit der Umgebung ausserhalb des Ventiles. Die Form der Durchbrüche 25 ist am deutlichsten in der Figur 3 erkennbar. Im Prinzip ist praktisch das gesamte Material, das aus statischen Gründen nicht erforderlich ist, weggenommen. Sämtliche Durchbrüche 25 kommunizieren miteinander über den relativ flachen ringförmigen Druckentlastungsraunm 24, der wie bereits erwähnt zwischen dem umlaufenden Kragen 22 und der umlaufenden Schulter 23 angeordnet ist. Um bei der Montage des Ventiles die Poppets 4, die die Gestalt eines Pilzes haben und einen Führungsteil 40 sowie einen Schliesskopf 41 aufweisen, leichter in die Sacklochbohrungen 21 einführen zu können, sind die Sacklochbohrungen 20 mit entsprechenden Anphasungen 26 versehen.

Die Poppets, die wie bereits erwähnt, praktisch die Form eines Pilzes haben, haben in ihrem Führungsteil 20 von ihrem rückseitigen Ende her konische Aufnahmen 42. Dies ist in der Figur 1 ersichtlich, indem ein Poppet 4 teilweise geschnitten dargestellt ist. In der konischen Aufnahme 42 liegen so die entsprechenden Druckfedern 5 zentriert und gehalten. Diese Druckfedern 5 lagern, wie bereits erwähnt, jeweils auf einem entsprechenden Ring beziehungsweise Ringscheibe 9. Dieser vorzugsweise aus Metall gefertigte Ring 9 weist ebenfalls eine zentrische Durchgangsbohrung auf, damit die Sacklochbohrung, wie bereits erwähnt, entlüftet werden kann.

Bei der Fertigungsmontage beziehungsweise bei der Revision des erfindungsgemäss vielsitzigen Poppetventils wird man das Kraftschlussmittel 8, hier als Schraube 71 mit entsprechender Mutter 72, zusammenfügen beziehungsweise auseinandernehmen. Hierzu genügt es, die Schraube 71 zu lösen. Ist das Kraftschlussmittel 8 gelöst, so verbindet die beiden Deckel 2 und 3 lediglich noch ein Lagefixiermittel 7, welches beispielsweise als Metallstift ausgestaltet ist. Dieser Metallstift 70 lagert in entsprechenden Sacklochbohrungen, die im Bereich des Kragens 22 beziehungsweise 32 eingelassen sind. Im zusammengebauten Zustand durchsetzt dieser Stift 70 zugleich die Sitzplatte 6. Gleichzeitig wird die Sitzplatte 6 noch durch die Schraube 71 positioniert, die somit einerseits ein Lagefixierelement sowohl als auch ein Kraftschlussmittel darstellt.

Der Ventilsitzdeckel 3 wird zwar weiterhin als Ventilsitzdeckel bezeichnet, obwohl die eigentlichen Ventilsitze nicht mehr in diesem Deckel 3 eingearbeitet sind sondern in der separaten Sitzplatte 6. Für eine Revisionsarbeit kann problemlos dies Sitzplatte 6 ausgewechselt werden, wobei eine Reinigung und ein Nachschleifen der Sitzplatte 6 sich erübrigt. Es ist aber durchaus möglich, die ausgewechselten Sitzplatten 6 nachträglich nachdem die eigentliche Revisionsarbeit abgeschlossen ist noch zu reinigen und zu bearbeiten.

### Liste der Bezugszahlen

- 1: Ventilgehäuse
- 2: Ventilanschlagdeckel
- 3: Ventilsitzdeckel
- 4: Poppets
- 5: Druckfeder
- 6: Sitzplatte
- 7: Lagefixiermittel
- 8: Kraftschlussmittel
- 9: Kunststoffring
- 20: Sacklöcher
- 21: Ausstoss- und Entlastungsbohrung
- 22: umlaufender Kragen
- 23: umlaufende Schulter
- 24: Druckentlastungsraum
- 25: Durchbrüche
- 26: Anphasung
- 27: zentrale Durchgangsbohrung
- 30: Einlassöffnungen
- 31: Rundungen
- 32: umlaufender Kragen
- 33: zentrale Durchgangsbohrung
- 40: Führungsteil
- 41: Schliesskopf
- 42: konische Aufnahme
- 60: geschliffene Sitzfläche
- 70: Metallstift
- 71: Schraube
- 72: Mutter

## Patentansprüche

1. Vielsitziges Poppetventil mit einem Ventilgehäuse (1) bestehend aus einem Ventilsitzdeckel (3) und einem Ventilanschlagdeckel (2), wobei die beiden das Ventilgehäuse (1) bildenden Deckel kraftschlüssig zusammengehalten sind und die im Ventilanschlagdeckel (2) lagernden Poppets (4) als Ventilschliesselement mit ihrem Führungsteil (40) in diesem Deckel (2) beweglich geführt sind und mittels einer Druckfeder (5) mit ihrem Schliesskopf (41) an den Ventilsitzdeckel (3) unter Druck anliegen,
**dadurch gekennzeichnet, dass** zwischen dem Ventilsitzdeckel (3) und dem Ventilanschlagdeckel (2) eine vielsitzige, auswechselbare Sitzplatte (6) angeordnet ist, die mittels mindestens zwei Lagefixiermitteln (7) und einem Kraftschlussmittel (8) lagepositioniert gehalten ist.

2. Poppetventil nach Anspruch 1, **dadurch gekennzeichnet, dass** die Sitzplatte (6) eine Metallplatte oder Kunststoffplatte ist und die Poppets (4) aus Kunststoff gefertigt sind.

3. Poppetventil nach Anspruch 1, **dadurch gekennzeichnet, dass** die Poppets (4) mit ihrem Führungsteil (40) in Sacklöchern (20) gleitend gelagert sind, wobei darin die Druckfeder (5) liegt, die in eine konische Aufnahme (42) im Führungsteil (40) eingreifen.

4. Poppetventil nach Anspruch 3, **dadurch gekennzeichnet, dass** in den Sacklöchern (29) jeweils eine zentrische Ausstoss- und Entlastungsbohrung vorhanden ist.

5. Poppetventil nach Anspruch 3, **dadurch gekennzeichnet, dass** die Sitzplatte (6) vollflächig auf dem Ventilsitzdeckel (3) aufliegt, während sie auf dem Ventilanschlagdeckel (2) auf einem umlaufenden Kragen (22) des Ventilanschlagdeckels (2) sowie im Bereich der Druckführung des mindestens einen Kraftschlussmittels aufliegt.

6. Poppetventil nach Anspruch 1, **dadurch gekennzeichnet, dass** die Lagefixiermittel (7) einerseits ein Haltestift (70) sind, der in beiden Deckeln (2, 3) sitzt und die Sitzplatte (6) durchsetzt, und andererseits vom Kraftschlussmittel (8) gebildet sind, welches eine zentrale, beide Deckel und die Sitzplatte durchsetzende Schraube (71) ist.

7. Poppetventil nach den Ansprüchen 5 und 6, **dadurch gekennzeichnet, dass** im Bereich, in dem das Kraftschlussmittel (8) den Ventilanschlagdeckel (2) durchsetzt, eine umlaufende Schulter (23) vorhanden ist, die fluchtend in einer Ebene mit dem umlaufenden Kragen (22) liegt.

8. Poppetventil nach Anspruch 7, **dadurch gekennzeichnet, dass** der Raum in der Ventilanschlagplatte (2) zwischen dem umlaufenden Kragen (22) und der umlaufenden Schulter (23) ein Druckentlastungsraum (24) ist, der mit Durchbrüchen (25) im Ventilanschlagdeckel kommuniziert.

9. Poppetventil nach Anspruch 1, **dadurch gekennzeichnet, dass** das Ventilgehäuse (1) aus Metall und die Poppets (4) aus Kunststoff, insbesondere aus PEEK, gefertigt sind.

10. Poppetventil nach Anspruch 4, **dadurch gekennzeichnet, dass** in den Sacklöchern (20) jeweils ein die Auflage der Druckfedern (5) bildender Kunststoffring liegt.

## Claims

1. A poppet valve with multiple seats, with a valve housing (1) consisting of a valve seat cover (3) and a valve guard cover (2), wherein the two covers forming the valve housing (1) are held together with a non-positive fit, and the poppets (4) which are mounted in the valve guard cover (2) as a valve closure element are movably guided in this cover (2) with their guide part (40) and by way of a compression spring (5) bear with their closure head (41) under pressure on the valve seat cover (3), **characterised in that** a multiple-seat, exchangeable seat plate (6) is arranged between the valve seat cover (3) and the valve guard cover (2) and this plate is held in position by way of at least two position fixation means (7) and a non-positive fit means (8).

2. A poppet valve according to claim 1, **characterised in that** the seat plate (6) is a metal plate or plastic plate and the poppets (4) are manufactured of plastic.

3. A poppet valve according to claim 1, **characterised in that** the poppets (4) are slidingly mounted with their guide part (40) in pocket holes (20), wherein the compression springs (5) lie therein, which engage into a conical receiver (42) in the guide part (40).

4. A poppet valve according to claim 3, **characterised in that** in each case a centric ejection and relief bore is present in the pocket holes (20).

5. A poppet valve according to claim 3, **characterised in that** the seat plate (6) lies on the valve seat cover (3) over the whole area, whereas it lies on the valve guard cover (2) on a circumferential collar (22) of the valve guard cover (2) as well as in the region of the leading-through (passage) of the at least one non-positive fit means.

6. A poppet valve according to claim 1, **characterised in that** the position fixation means (7) on the one hand is a retaining pin (70) which is seated in both covers (2, 3) and passes through the seat plate (6), and on the other hand are formed by non-positive fit means (8) which is a central screw (71) passing through both covers and the seat plate.

7. A poppet valve according to the claims 5 and 6, **characterised in that** a peripheral shoulder (23) is present in the region in which the non-positive fit means (8) passes through the valve guard cover (2), and this shoulder lies flush in a plane with the peripheral collar (22).

8. A poppet valve according to claim 7, **characterised in that** the space in the valve guard plate (2) between the peripheral collar (22) and the peripheral shoulder (23) is a pressure relief space (24) which communicates with openings (25) in the valve guard cover.

9. A poppet valve according to claim 1, **characterised in that** the valve housing (1) is manufactured of metal and the poppets (4) of plastic, in particular of PEEK.

10. A poppet valve according to claim 4, **characterised in that** in each case a plastic ring forming the rest (support) of the compression springs (5) lies in the pocket holes (20).

## Revendications

1. Soupape à siège multiple avec une cage de soupape (1) consistant en un couvercle de siège de soupape (3) et un couvercle de butée de clapet (2), auquel cas les deux couvercles formant la cage de soupape (1) sont tenus ensemble par encastrement positif et les soupapes en champignon (4), étant logés dans le couvercle de butée de clapet (2), sont conduits de façon mobile avec leur partie de guidage (40) dans ce couvercle (2) en tant qu'élément de fermeture de soupape et adhérent sous pression au couvercle de siège de soupape (3) avec leur tête fermante (41) à l'aide d'un ressort de pression (5),
**caractérisée par le fait qu'**une plaque d'assise (16) à siège multiple et échangeable est placée entre le couvercle de siège de soupape (3) et le couvercle de butée de clapet (2) et cette plaque d'assise est maintenue positionnée dans l'emplacement à l'aide d'au moins deux fixateurs d'emplacement (7) et d'un moyen à encastrement positif (8).

2. Soupape à siège multiple selon la revendication 1, **caractérisée par le fait que** la plaque d'assise (6) est une plaque de métal ou une plaque de matière synthétique et que les soupapes en champignon (4) sont fabriqués en matière synthétique.

3. Soupape à siège multiple selon la revendication 1, **caractérisée par le fait que** les soupapes en champignon (4) avec leur partie de guidage (40) sont logées de façon coulissante dans des trous borgnes (20), auquel cas là-dedans se trouve le ressort à pression (5) qui s'engrène dans un logement (42) conique dans la partie de guidage (40).

4. Soupape à siège multiple selon la revendication 3, **caractérisée par le fait que** dans les trous borgnes (29) respectivement un trou d'éjection et un trou de décharge sont disponibles.

5. Soupape à siège multiple selon la revendication 3, **caractérisée par le fait que** la plaque d'assise (6) s'appuie sur toute la surface sur le couvercle de siège de soupape (3) tandis qu'elle s'appuie sur le couvercle de siège de soupape (3) sur un rebord (22) tournant du couvercle de butée de clapet (2) ainsi que dans le secteur du conducteur de pression d'au moins un moyen à encastrement positif.

6. Soupape à siège multiple selon la revendication 1, **caractérisée par le fait que** les fixateurs d'emplacement (7) sont d'une part une goupille de fixation (70) qui est placée dans les deux couvercles (2, 3) et qui traverse la plaque d'assise (6) et d'autre part ces fixateurs d'emplacement (7) sont formés par un moyen à encastrement positif (8) qui est une vis (71) centrale traversant les deux couvercles et la plaque d'assise.

7. Soupape à siège multiple selon les revendications 5 et 6, **caractérisée par le fait que** dans le secteur, dans lequel le moyen à encastrement positif (8) traverse le couvercle de butée de clapet (2), une épaule (23) tournante est disponible qui elle est située en alignement dans un plan avec le rebord (22) tournant.

8. Soupape à siège multiple selon la revendication 7, **caractérisée par le fait que** l'espace dans lequel la plaque de butée de clapet (2) se trouve entre le rebord (22) tournant et l'épaule (23) tournante est un espace de décompression (24) qui communique avec des ouvertures (25) dans le couvercle de butée de clapet.

9. Soupape à siège multiple selon la revendication 1, **caractérisée par le fait que** la cage de soupape (1) est fabriquée en métal et les soupapes en champignon (4) sont fabriqués en matière synthétique, en particulier en polyétheréthercétone.

10. Soupape à siège multiple selon la revendication 4, **caractérisée par le fait que** respectivement un anneau en matière synthétique est situé dans les trous borgnes (20), cet anneau en matière synthétique formant l'appui des ressorts à pression (5).
